# EUROPÄISCHE PATENTSCHRIFT

(11) **EP 3 114 087 B1**
(45) Veröffentlichungstag und Bekanntmachung des Hinweises auf die Patenterteilung: **28.08.2019**
(21) Anmeldenummer: 15732513.5
(22) Anmeldetag: 05.03.2015
(51) Int. Cl.: C02F 1/461, C02F 1/467, C01B 11/02

(54) **VERFAHREN UND VORRICHTUNG ZUR HERSTELLUNG WÄSSRIGER CHLORDIOXIDLÖSUNGEN**
METHOD AND DEVICE FOR PRODUCING AQUEOUS CHLORINE DIOXIDE SOLUTIONS
VERFAHREN UND VORRICHTUNG ZUR HERSTELLUNG WÄSSRIGER CHLORDIOXIDLÖSUNGEN

(30) Priorität: 06.03.2014 DE 102014204142
(43) Veröffentlichungstag der Anmeldung: 11.01.2017
(73) Patentinhaber: Dörfer, Hans-Jürgen, 38179 Schwülper (DE)
(72) Erfinder: Dörfer, Hans-Jürgen, 38179 Schwülper (DE)
(74) Vertreter: Lins, Martina
(86) Internationale Anmeldenummer: PCT/DE2015/000123
(87) Internationale Veröffentlichungsnummer: WO 2015/131874

(56) Entgegenhaltungen:
- WO-A1-2010/019491
- US-A- 4 472 254
- US-A- 4 877 500

## Beschreibung

Die Erfindung betrifft ein Verfahren zur Herstellung einer wässrigen Chlordioxidlösung mit Hilfe von Chlor und Sauerstoffionen in einem Reaktor, und zwar mit Hilfe von Chlor als einziger wesentlicher CI-Quelle, insbesondere ohne den Einsatz von Chloriten und Chloraten. Die Erfindung betrifft weiter eine Vorrichtung zur Durchführung des Verfahrens.

Chlordioxid ist seit langem unter anderem als Bleichmittel und als Desinfektionsmittel im Gebrauch. Einer der Vorteile liegt darin, dass Chlordioxid oxidierend wirkt und praktisch keine karzinogenen organischen Chlorverbindungen aus den zu behandelnden Stoffen bildet. Chlordioxid ist bei Raumtemperatur gasförmig. Da Gemische von Chlordioxid mit Luft bereits ab einem Anteil von 10 Vol.-% ClO₂ explosiv sind, wird es meist in wässrigen Lösungen verwendet, die nicht explosiv sind.

Wässrige Lösungen von Chlordioxid haben sich als relativ sicher anwendbare Desinfektionsmittel für verschiedene Bereiche durchgesetzt. Ein wichtiges Anwendungsgebiet ist die Wasserbehandlung. Hier wurde und wird vielfach Chlor verwendet, das jedoch teilweise durch Chlordioxid-Lösungen verdrängt wird. Haupteinsatzgebiete sind die Trinkwasserdesinfektion und die Primärdesinfektion für Oberflächenwasser, da ClO₂ schon in sehr niedrigen Konzentrationen von ca. 0,1 ppm ein sehr wirkungsvolles Biozid ist. Weitere Anwendungen sind die Desinfektionen von Abwässern und die Schimmelbekämpfung. Wegen des breiten Wirkungsspektrums wird Chlordioxid auch für die Desinfektion von Gebäuden und in der Lebensmitteltechnik eingesetzt, denn es wirkt im Gegensatz zu Chlor nicht nur gegen Bakterien, sondern auch gegen Viren und viele Protozoen. In Deutschland ist Chlordioxid nach § 11 der Trinkwasserverordnung für die Trinkwasseraufbereitung zugelassen.

Die Herstellung von Chlordioxid erfolgt klassisch aus Chloraten oder Chloriten. Aus Chloraten erfolgt die Herstellung mittels Reduktion in stark saurer Lösung. Gemäß dem Mathieson-Verfahren wird als Reduktionsmittel Schwefeldioxid eingesetzt, beim Solvay-Verfahren ist dies Methanol, das jedoch Chlorat nur sehr langsam zu Chlordioxid umsetzen kann. Für die Trinkwasserbehandlung werden häufig Chlorite als Ausgangsstoffe eingesetzt. Diese klassischen Chlordioxid-Herstellungsverfahren sind altbekannt. So beschreibt bereits die DT 1 467 024 aus dem Jahre 1964 (Degussa) ein Verfahren zur Herstellung von reinem Chlordioxid in wässriger Lösung, bei welchem Chloritlösungen mit Chlorwasser behandelt werden.

Die WO 2010/019491 A1 offenbart ein Verfahren und Zusammensetzungen zur Herstellung von Chlordioxid unter Verwendung von Ozon in einer wässrigen Lösung, die wenigstens ein Metallchlorit und wenigstens ein Metallhalogenid enthält, und zwar in ausdrücklicher Abwesenheit elektrolytischer Bedingungen.

Die US 4,877,500 A offenbart ein Verfahren und eine Vorrichtung zur Erzeugung von Chlordioxid durch Bestrahlen einer Mischung aus Chlorgas und Sauerstoffgas mit UV-Licht. Gemäß einer Verfahrensalternative kann auch Chlorwasser verwendet werden. Die Reaktion, die unter Einfluss von UV-Licht abläuft, ist als eine Photooxidation von Chlor aufzufassen

Die US 4,472,254 offenbart ein reines Gasphasenverfahren zur Herstellung von Chlordioxid (ClO₂) aus Chlorgas (Cl₂) und Sauerstoffgas (O₂). Bei dem Verfahren kann mit einem zusätzlichen Inertgas zur initialen Plasmaerzeugung oder - verstärkung gearbeitet werden. Alternativ kann das Sauerstoffgas dazu dienen, das Plasma zu initiieren. In diesem Plasma entstehen innerhalb eines Plasmagenerators in einer Plasmazone Sauerstoffionen, die mit dem derselben Plasmazone zugeführten und dort dissoziierenden Chlor zu gasförmigem Chlordioxid reagieren.

Der Erfindung liegt die Aufgabe zugrunde, ein sicher zu handhabendes Verfahren zur Herstellung von Chlordioxid zu finden, das zu weitestgehend chlorit- und chloratfreien wässrigen Chlordioxidlösungen führt. Die Ausgangsstoffe sollen gut zugänglich sein. Das Verfahren sollte kontinuierlich durchführbar sein.

Die Aufgabe wird gelöst mit einem Verfahren nach Anspruch 1 und einer Vorrichtung nach Anspruch 9.

Das erfindungsgemäße Verfahren setzt als Chlorquelle für das Chlordioxid ausschließlich Chlor ein, d.h. gasförmiges Chlor oder sogenanntes Chlorwasser, bei dem das gasförmige Chlor in Wasser gelöst vorliegt. Das Wasser kann dabei einen natürlichen Alkalichlorid-Gehalt besitzen (Trinkwasser) oder einen erhöhten bis gesättigten Gehalt (Sole). Die kritischen Oxoanionen des Chlors, insbesondere Chlorate und Chlorite, werden als Ausgangsstoffe vollständig vermieden. Kern der Erfindung ist es, elementares Chlor mit Sauerstoffionen in Verbindung zu bringen, um Chlordioxid zu erzeugen.

Zur Herstellung des Chlordioxids wird das Chlor mit einem sauerstoffionenhaltigen Gas in Anwesenheit von Wasser, d.h. in wässrigem Milieu, zusammengeführt und zur Reaktion gebracht.

Die Zusammenführung kann in verschiedenen Varianten erfolgen. Zum einen können gasförmiges Chlor und das frisch erzeugte sauerstoffionenhaltige Gas in einen Reaktor eingeführt werden, in dem Wasser - auch salzhaltiges, insbesondere alkalichloridhaltiges Wasser - vorgelegt wird; weiterhin kann ein Chlorwasser, d.h. Chlor gelöst in Wasser (mit natürlichem Salzgehalt oder einer Sole) vorgelegt und mit dem sauerstoffionenhaltigen Gas zusammengeführt werden; weiterhin kann das sauerstoffionenhaltige Gas durch Wasser oder Sole geleitet werden, so dass eine sauerstoffionenreiche wässrige Lösung entsteht, die anschließend mit dem Chlor zusammengeführt wird.

In Summe ergeben Wasser, Chlor und das sauerstoffionenhaltige Gas eine chlordioxidhaltige wässrige Lösung. Das Reaktionsschema kann im Groben wie folgt wiedergegeben werden, ohne dass andere Mechanismen ausgeschlossen werden sollen:

| | |
|---|---|
| Sauerstoffionisation: | 8O₂ → 4O₂⁺ + 4O₂⁻ |
| Oxidation von Chlor: | Cl + 2H₂O → ClO₂ + 4e⁻ + 4H⁺ |
| O₂⁺ als Oxidationsmittel: | 4O₂⁺ + 4e⁻ → 4O₂ |
| O₂⁻ als Base: | 4O₂⁻ + 4H⁺ → 4HO₂ |
| Disproportionierung von HO₂: | 4HO₂ → 2H₂O + 3O₂ |
| **Gesamte Reaktionsgleichung:** | **Cl + O₂ → ClO₂** |

Das eingesetzte Chlor wird elektrolytisch erzeugt, wobei die Chlorerzeugung in das Verfahren selbst integriert ist.

In einem Reaktor werden die Sauerstoffionen mit dem Chlor unter Zusatz von Wasser oder in wässriger Lösung, wie unten noch näher beschrieben, zur Reaktion gebracht. Eine Verfahrensführung zwischen sauerstoffionenhaltigem Gas und Chlorgas allein könnte zu großen Konzentrationsschwankungen und zu explosiven Gemischen führen.

Grundsätzlich wird elementares Chlor auf folgende Weise zur Verfügung gestellt:
1) Bereitstellen von innerhalb der Anlage in einer vorgeschalteten Elektrolyseeinheit erzeugtem Chlor;
2) Erzeugen von Chlor *in situ* bei Anwesenheit von Sauerstoffionen in einem Elektrolyse-Anodenraum, der zugleich Chlordioxid-Reaktor ist.

Das Chlor wird gemäß einer ersten Verfahrensalternative in einer unmittelbar vorgeschalteten Elektrolyse erzeugt, oder es wird gemäß einer zweiten Verfahrensalternative *in situ* während der Chlordioxidherstellung bereitgestellt.

Nach der ersten Verfahrensalternative erfolgt die Erzeugung des Chlorgases elektrolytisch in einem vorgeschalteten Schritt. Geeignete Elektrolyseverfahren sind dem Fachmann bekannt und brauchen hier nicht gesondert beschrieben zu werden. Es kann beispielsweise eine geteilte Elektrolysezelle (Membranzellenelektrolyse) verwendet werden, in der anodenseitig eine Natriumchloridsole elektrolytisch zu Chlorgas oxidiert wird, das gasförmig oder als wässrige (Salz-)Lösung abgenommen wird. Die Konzentration der erhaltenen Chlorlösungen liegt bei ca. 20 g Chlor pro Liter. Zugleich entsteht Natronlauge und Wasserstoff. Verfahren zur elektrolytischen Chlorgewinnung, die hier genutzt werden könnten, sind u. a. bekannt aus DE 1 962 480, DT 2030610 B2 und EP 0 266 801 A2.

In einer alternativen Ausführungsform der ersten Verfahrensalternative kann eine chlorhaltige Lösung mittels einer ungeteilten Elektrolysezelle mit einem inline-Elektrolyseverfahren, auch als Rohrelektrolyse bezeichnet, hergestellt werden. Der Chlorgehalt bleibt dabei bei einem reduzierten apparativen Aufwand in der Regel unter 5 g Chlor/Liter Lösung. Bringt man diese Lösungen mit dem sauerstoffionenhaltigen Gas zusammen, entstehen verdünnte wässrige Chlordioxidlösungen, die unter anderem für Desinfektionszwecke gut geeignet sind. Dabei vermeidet das Verfahren die Handhabung von freiem Chlorgas und ist daher verfahrenstechnisch sehr sicher.

Das elektrolytisch erzeugte Chlor kann gasförmig aus der Elektrolyseeinheit entnommen und einem mit Wasser oder einer wässrigen Lösung (Sole) betriebenen Reaktor für die Erzeugung von Chlordioxid zugeführt werden. Getrennt hiervon wird dem Reaktor ein sauerstoffionenhaltiges Gas zugeführt. Das Chlorgas kann in anderen Ausführungsformen dieser Verfahrensalternative von außen in die Anlage zugeführt werden.

In weiteren Ausführungsformen kann das elektrolytisch erzeugte Chlorgas in Wasser (Trinkwasser) oder frische Sole eingeleitet und als Chlorwasser im weiteren Verfahren verwendet, d.h. dem Chlordioxid-Reaktor zugeführt werden. Alternativ hierzu kann der Elektrolysezelle anodenseitig chlorhaltige Sole entnommen und im Sinne der weiteren Beschreibung als Chlorwasser geführt und in den Chlordioxidreaktor eingeführt werden.

In einer ersten Verfahrensvariante wird also bei einem Verfahren zur Herstellung einer wässrigen Chlordioxid-Lösung mit Hilfe von Chlor als Cl-Quelle in einem Reaktor gasförmiges Chlor mit einem sauerstoffionenhaltigen Gas in Anwesenheit von Wasser zusammengeführt, um eine chlordioxidhaltige wässrige Lösung zu ergeben.

Gemäß einer zweiten Verfahrensalternative wird das in der Elektrolyseeinheit erzeugte Chlor *in situ,* d.h. in der Anoden-Teilzelle, mit während der Elektrolyse zugeführten Sauerstoffionen in Kontakt gebracht. Hierfür wird das sauerstoffionenhaltige Gas und besonders bevorzugt eine mit dem sauerstoffionenhaltigen Gas beladene Elektrolyse-Sole in den Anodenraum eingebracht. Die Elektrolyseeinheit, bzw. deren Anodenraum, stellt in dieser zweiten Alternative den Reaktor für die primäre Chlordioxiderzeugung dar. Bei dieser Verfahrensweise werden vorzugsweise Nachbehandlungsschritte angeschlossen. Hierfür können optional zusätzliche Reaktoren vorgesehen sein.

Sauerstoff ist selbst ein Molekül mit diradikalischem Charakter, dessen unmittelbare eigene Reaktion mit Reaktionspartnern wie Chlor jedoch u.a. kinetisch gehemmt ist. Überraschender Weise hat sich herausgestellt, dass für die Chlordioxiderzeugung eine "Aktivierung" des Sauerstoffs durch wenigstens partielle Ionisierung zielführend ist. Hierfür wird Sauerstoff oder ein sauerstoffhaltiges Gas ionisiert.

Das erfindungsgemäße Verfahren macht in jedem Falle - in allen Verfahrensalternativen und Ausführungsformen - Gebrauch von sauerstoffionenhaltigen, ionisierten Gasen, wobei die Sauerstoffionen innerhalb der Anlage frisch durch Hochspannung erzeugtwerden und sich primär innerhalb des Gasstroms, in dem sie erzeugt werden, befinden.

Die Ionisierung ist niemals vollständig, so dass ein Großteil des ionisierten Gases aus dem Ausgangsgas besteht. Ein hoher Sauerstoffgehalt ist dabei förderlich. Vorzugsweise wird Luft verwendet oder ein anderes Sauerstoff-Mischgas, dessen übrige Bestandteile außer Sauerstoff im Hinblick auf die Ionisation und die Reaktion mit Chlor weitgehend unreaktiv bleiben.

Es wird davon ausgegangen, dass die Ionisation des sauerstoffhaltigen Gases oder des reinen Sauerstoffs in erster Linie O₂⁺-Ionen (Disauerstoffkationen) und O₂⁻-Ionen (Hyperoxidanionen) erzeugt. Daneben können weitere ionisierte und/oder angeregte Sauerstoff-Spezies vorliegen. Durch eine Hochspannungsionisation wird in Abhängigkeit von dem speziellen Verfahren und der Spannung eine gewisse Menge Ozon miterzeugt. Es können weiterhin u.a. geringe Mengen an Ozonidionen und Peroxidanionen in dem erzeugten sauerstoffionenhaltigen Gas vorhanden sein. Die Sauerstoffionen des sauerstoffionenhaltigen Gases werden hier vereinfachend mit "O2+/- (O3)" abgekürzt. Das sauerstoffhaltige Gas enthält immer einen beträchtlichen Anteil nicht ionisierten Sauerstoffs.

Die Sauerstoffionen in dem sauerstoffionenhaltigen Gas, das in dem erfindungsgemäßen Verfahren Verwendung findet, umfassen O₂⁻-Ionen und O₂⁺-Ionen. Diese Ionen werden mit Hilfe von Hochspannung erzeugt. Als Ausgangsgase werden Luft, Sauerstoff, Gemische aus Luft mit Sauerstoff, Gemische aus Edelgasen mit Sauerstoff, edelgasangereichte Luft oder Luftsauerstoffgemische eingesetzt. Die Bildung von Stickstoffionen sollte weitgehend vermieden werden, in einigen Ausführungsformen auch die Bildung von Ozon. Geeignete Luftionisationsverfahren sind bekannt und dienen beispielsweise der Luftreinigung und -desinfektion. Geeignete Verfahren und Apparate zur Erzeugung von Sauerstoffionen in sauerstoffhaltigen Gasen, insbesondere Luft, sind beispielsweise beschrieben in DT 1278084 A, DE 4334956 C2, DE 196 51 402 A1 und DE 199 31 662 B4. Das sauerstoffionenhaltige Gas, das bei der Erfindung eingesetzt wird, ist ausgewählt aus ionisierten Gasen aus den oben genannten Ausgangsgasen.

Ein mögliches Verfahren für die Herstellung des für das erfindungsgemäße Verfahren erforderlichen sauerstoffionenhaltigen Gases besteht darin, das Ausgangsgas, vorzugsweise Luft, einer dielektrischen Barriereentladung, beispielsweise durch Hochspannungsionisationsröhren, auszusetzen. Ionisationsverfahren, die mit einer Koronaentladung oder einer Plasmaentladung arbeiten, sind ebenfalls geeignet.

Gemäß besonders bevorzugten Ausführungsformen der zweiten Verfahrensalternative der Erfindung wird das sauerstoffionenhaltige Gas vorab in der Sole in Lösung gebracht, die der Elektrolysezelle zugeführt wird Das sauerstoffionenhaltige Gas ist in der Sole sehr viel besser löslich als in Wasser, beispielsweise dem Wasser, mit dem der zentrale Reaktor für die Chlordioxiderzeugung betrieben werden kann. Wird das sauerstoffionenhaltige Gas zugleich mit dem Chlorgas dem Reaktor zugeführt, wie in der ersten Ausführungsform der ersten Verfahrensalternative als apparativ weniger aufwändige und sichere Methode vorgesehen, kann das sauerstoffionenhaltige Gas ggf. in zu starkem Maße vor der Reaktion zu Chlordioxid ausgetrieben werden. Dies wird bei der zweiten Verfahrensalternative vermieden. Dabei wird eine mit dem sauerstoffionenhaltigen Gas beladene Sole für die Elektrolyse verwendet. Das *in situ* gebildete Chlor reagiert unmittelbar mit den Sauerstoffionen, bevor einer der Reaktionspartner ausgetrieben werden könnte. Eine Nachbehandlung in einem weiteren Reaktor oder einem der Elektrolyse nachgeschalteten Leitungssystem (in der Funktion als Rohrreaktor) ist in jedem Falle zu empfehlen, um gelöstem Chlor die Möglichkeit zu geben, weiter abzureagieren oder mit an weiteren Zugabepunkten zugeführten Sauerstoffionen abzureagieren. Aus dem Nachbehandlungsreaktor können außerdem überschüssige Gase abgelassen werden.

Das Verfahren wird in beiden Alternativen vorzugsweise kontinuierlich geführt, wobei aus dem Reaktor kontinuierlich oder intermittierend wässrige Chlordioxid-Lösung abgeführt wird. Diese kann entweder unmittelbar dem Anwendungszweck zugeführt werden oder in einen Vorratsbehälter überführt werden, um aus diesem bei Bedarf entnommen zu werden.

Das Verfahren kann auf verschiedene Weise ausgeführt werden. Die für die Erzeugung des Chlordioxids erfindungsgemäß verwendete Reaktion (bilanziert: Cl (aq) + O₂ → ClO₂ (aq)) findet in einem Reaktor oder mehreren hintereinandergeschalteten Reaktoren statt. Dem zentralen Reaktor müssen Chlor, Wasser (Trinkwasser und/oder Sole) sowie ein sauerstoffionenhaltiges Gas zugeführt werden. Dabei muss das sauerstoffionenhaltige Gas immer frisch durch Hochspannung erzeugt worden sein.

Als Edukte sind für das Verfahren mindestens Wasser und ein sauerstoffhaltiges Ausgangsgas, vorzugsweise Luft, erforderlich. Das Wasser kann Trinkwasser mit natürlichem Salzgehalt sein, der Chloride umfasst. Vorzugsweise wird das Trinkwasser entkalkt, bevor es einer Elektrolyse zugeführt wird. Wenn der Salzgehalt des Trinkwassers, insbesondere an Alkalichloriden, d.h. NaCl oder KCl, für eine Elektrolyse nicht ausreicht oder wenn eine stärkere Chlorkonzentration erhalten werden soll, kann zusätzlich Natriumchlorid erforderlich sein, fest oder als Sole. Als weitere Hilfssubstanzen können gegebenenfalls - je nach Ausführungsform - Mittel zur pH-Regulierung erforderlich oder zweckmäßig sein, dies sind Säuren und/oder Laugen, vorzugsweise NaOH (aq) und HCl (aq).

Ein wesentlicher Vorteil des Verfahrens besteht darin, dass es so konzipiert werden kann, dass Chlordioxid am Herstellungsort aus einfachsten Edukten erhältlich ist. Neben Strom wird grundsätzlich nur Wasser und Luft oder ein anderes sauerstoffhaltiges Gas oder Gasgemisch benötigt. Gegebenenfalls kommen NaCl, NaCl-Sole und/oder einfache Säuren und/oder Basen zur pH-Regulierung hinzu. Chlor wird gasförmig zugeführt, wenn keine Elektrolyse vorgesehen ist. Diese Edukte sind einfach bereitzustellen und an vielen, auch entlegenen Orten der Welt leicht erhältlich.

Eine Vorrichtung zur Durchführung des Verfahrens umfasst in jedem Falle eine Einheit, die ein Ausgangsgas in ein sauerstoffionenhaltiges Gas überführt. Diese Einheit wird hier allgemein als Ionisationseinheit bezeichnet. Darin wird Sauerstoff oder ein sauerstoffionenhaltiges Gas einer Hochspannungsentladung ausgesetzt, vorzugsweise einer dielektrischen Barriereentladung durch Hochspannungsionisationsröhren.

Das Chlor kann gemäß der ersten Verfahrensalternative gasförmig bereitgestellt und zugeführt werden. Das Chlor wird in einer vorgeschalteten Einheit innerhalb der Anlage, d.h. innerhalb der erfindungsgemäßen Gesamtvorrichtung zur Herstellung von Chlordioxid, im Anodenraum einer Elektrolyseeinheit hergestellt.

Die Elektrolyseeinheit ist gemäß einer ersten allgemeinen apparativen Ausführungsweise (zur ersten Verfahrensalternative) dem zentralen Reaktor zur Chlordioxiderzeugung vorgeschaltet. Das in einer vorgeschalteten Elektrolyseeinheit erzeugte Chlor kann jedoch auch in gelöster Form mit der anodenseitig verwendeten Sole abgenommen und wie das aus Wasser oder Sole und Chlorgas nach der Elektrolyse erzeugte Chlorwasser weiterverwendet werden.

Für die Zuführung der Edukte Wasser und/oder Sole, Chlor und sauerstoffionenhaltiges Gas zum zentralen Reaktor sowie die Stoffführung im Reaktor gibt es wiederum mehrere Möglichkeiten.

Gemäß einer ersten Alternative wird dem Reaktor Wasser zugeführt, und an voneinander getrennten Zugabepunkten werden Chlorgas und sauerstoffionenhaltiges Gas dem Reaktor zugeführt und mit dem darin befindlichen Wasser in Kontakt gebracht. Das Chlor löst sich in dem Wasser. Die dem Wasser zugeführten Sauerstoffionen reagieren sofort mit dem im Wasser gelösten Chlor und/oder in das Wasser frisch zugeführtem Chlor. Das sauerstoffionenhaltige Gas kommt so nicht mit gasförmigem Chlor in einem Gasstrom in Kontakt. Das gebildete Chlordioxid löst sich im Wasser und die gebildete Chlordioxidlösung wird dem Reaktor entnommen. Zuführraten, Konzentrationen, Verweilzeiten, Chlordioxid-Abnahmemenge usw. werden so eingestellt, dass die Umsetzung optimal ablaufen kann. Für das optimale in Kontaktbringen der Flüssigphase und der Gasphase können alle aus der Verfahrenstechnik bekannten Maßnahmen ergriffen werden. So könnten die Gase beispielsweise über Gaslanzen oder Fritten gleichmäßig in den Flüssigkeitsraum eingebracht werden. Alternativ sind Einbauten denkbar, die beispielsweise für die Verwirbelung der Flüssigkeit sorgen oder die Gase in der Flüssigkeit geeignet verteilen. Eine weitere vorteilhafte Verfahrensvariante besteht darin, die Flüssigphase über ein Bett aus Füllkörpern zu verteilen, dem die Gase zugeführt werden. Die vergrößerte Flüssigkeitsoberfläche verbessert den Gaszutritt, insbesondere des sauerstoffionenhaltigen Gases, und damit die Reaktion. Diese letztere Variante ist besonders vorteilhaft, wenn Chlor und Wasser gemeinsam zugeführt werden, nämlich in Form von Chlorwasser. In einer bevorzugten Ausführungsform wird das Chlorwasser aus der Anodenzelle der Elektrolyseeinheit entnommen, so dass das Wasser Chloride enthält, insbesondere NaCl. Das Chlorwasser ist in diesem Falle eine chlorhaltige Sole. In einer anderen Ausführungsform werden Chlor oder Chlorwasser einerseits und sauerstoffionenhaltiges Gas andererseits im Gegenstrom geführt.

Gemäß einer zweiten Vorrichtungsalternative für die Verfahrensalternative zwei wird das aus der Ionisationseinheit abgeführte sauerstoffionenhaltige Gas nicht oder nur optional zusätzlich dem zentralen Reaktor zugeleitet, in dem Wasser oder Chlorwasser vorgelegt ist, sondern wird der Anodenkammer einer vorgeschalteten Elektrolyseeinheit zugeführt, in der in einer Alkalichloridsole als Anolyt Chlor entsteht. Das sauerstoffhaltige Gas, Wasser und Chlor werden bei diesem Anlagenaufbau bereits in der Anodenkammer der Elektrolyseeinheit zusammengeführt, so dass die Anodenkammer zugleich einen ersten Reaktor für die Chlordioxiderzeugung darstellt.

Überraschender Weise wurde gefunden, dass sich das Verfahren auf diese Weise einfach und sicher handhaben lässt. Es können konventionelle Elektrolysezellen zum Einsatzkommen. Dies können Membranzellen oder inline-Elektrolysezellen (Rohrelektrolysezellen) sein, bei letzteren ist die Ausbeute geringer.

Die aus dem Reaktor abgenommene Chlordioxidlösung wird in einen Vorlagebehälter überführt, aus dem sie anschließend der Verwendung zugeführt wird. Der Vorlagebehälter sollte mit einem Druckausgleich und einer Möglichkeit zur Abluftabgabe ausgestattet sein. Die Qualität der gewonnenen Chlordioxidlösung und deren Konzentration kann mittels Sensoren überprüft werden. Vorzugsweise wird auch der pH-Wert überprüft und gegebenenfalls eingestellt. Sollte eine Erhöhung des pH-Werts angezeigt sein, kann für die pH-Wert-Einstellung die aus der Elektrolyse anfallende Natronlauge eingesetzt werden.

Eine Vorrichtung zur Durchführung der zweiten Verfahrensalternative umfasst zusätzlich zur Elektrolyseeinheit Mittel für die Zuführung des sauerstoffionenhaltigen Gases in den Anodenraum der Elektrolyseeinheit. Dies kann direkt geschehen, d.h., das sauerstoffionenhaltige Gas wird direkt über Leitungen (einschließlich Pumpen, Durchflussmessern, Sensoren und dergleichen, soweit erforderlich) in den Anodenraum der Elektrolyseeinheit eingeleitet. Bevorzugt wird jedoch der Elektrolyseeinheit eine Gasbeladungseinheit vorausgeschaltet, in der die für die Elektrolyse vorgesehene Sole mit dem sauerstoffionenhaltigen Gas beladen wird. Das sauerstoffionenhaltige Gas löst sich in der Sole. Die Sole, die nun Sauerstoffionen enthält, wird in üblicher Weise dem Anodenraum der Elektrolyseeinheit zugeführt. Das dort elektrolytisch erzeugte Chlor reagiert unmittelbar mit den Sauerstoffionen unter Bildung von Chlordioxid. In beiden Fällen stellt nun die Anodenkammer der Elektrolysezelle zugleich den Reaktor für die Erzeugung des Chlordioxids dar. Ein dem nachgeschalteter Reaktor, in dem die Reaktion zu Ende geführt wird, ist als Nachbehandlungsreaktor sinnvoll. Dieser nachgeschaltete oder zweite Reaktor kann entsprechend ausgestaltet sein, wie der zentrale Reaktor für die erste Verfahrensalternative. Dort wird auch abschließend, vorzugsweise über einen Aktivkohlefilter, entlüftet und die Abluft wird vorzugsweise mit einem Sensor auf Restozon getestet. Aus dem Nachbehandlungsreaktor wird die chlordioxidhaltige wässrige (und salzhaltige) Lösung abgeführt, wie zuvor schon beschrieben.

Auf dem Weg von der Elektrolyseeinheit zum Nachbehandlungsreaktor kann an ein- oder mehreren Zugabepunkten zum Leitungssystem nochmals eine mit Sauerstoffionen beladene Sole zugeführt werden, um weiteres in der Elektrolyseeinheit gebildetes Chlor zu Chlordioxid abreagieren zu lassen. Diese Zugabe kann zu einer aus der Elektrolysezelle abgenommenen chlor- und chlordioxidhaltigen Sole erfolgen oder, alternativ oder zusätzlich, zu gasförmig aus der Elektrolyseeinheit abgenommenem Chlor.

Im Falle einer inline-Elektrolyse kann das sauerstoffionenhaltige Gas dem verwendeten Trinkwasser oder der verwendeten Salzlösung zugeführt werden.

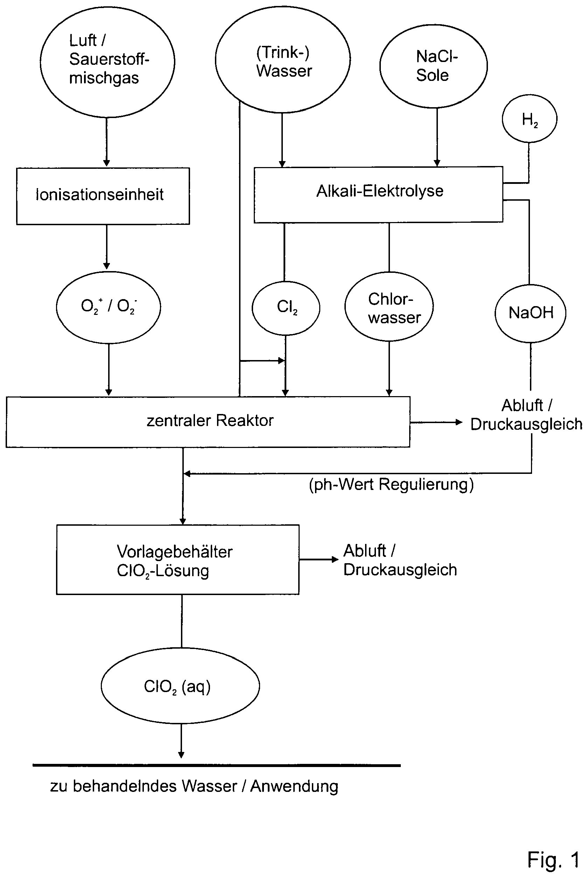

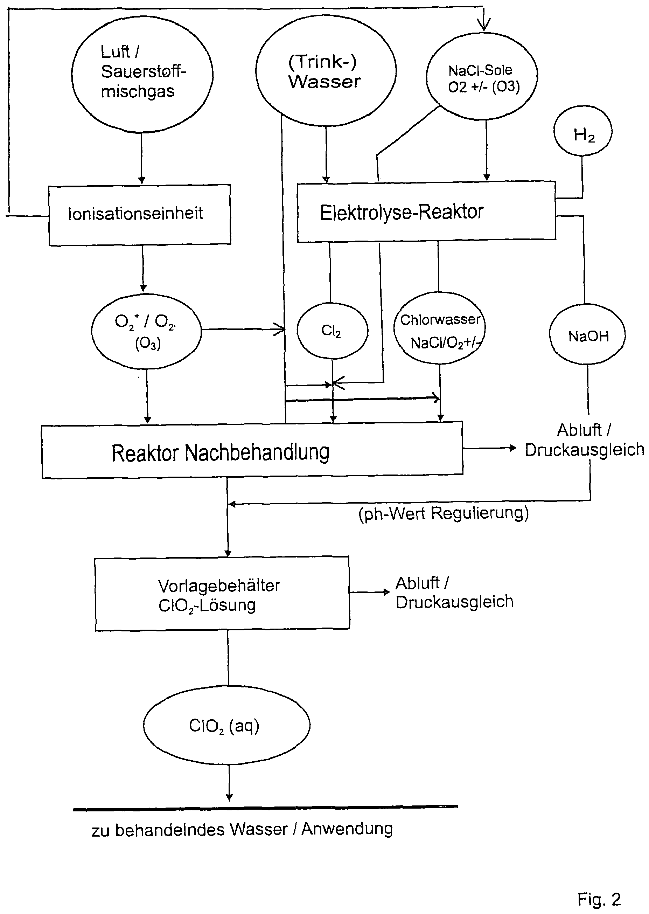

Wie erkennbar, sind für den Fachmann verschiedene Verfahrensvarianten und Stoffstromkombinationen im Sinne der vorstehenden Beschreibung ersichtlich. Die möglichen Verfahrenswege nach der Erfindung sind in Figuren 1 und 2 dargestellt, wie unten näher beschrieben.

Die erfindungsgemäße Vorrichtung zur Durchführung des Verfahrens nach der ersten Verfahrensalternative umfasst wenigstens einen Reaktor, in dem Wasser, Chlor und Sauerstoffionen zusammengeführt werden, sowie eine vorgeschaltete Einheit für die Erzeugung von Sauerstoffionen. Wie oben schon dargelegt, können die Sauerstoffionen, d.h. in erster Linie (O2-)-Ionen und (O2+)-Ionen, mit jedem geeigneten Verfahren bereitgestellt werden. Vorzugsweise arbeitet die Ionisationseinheit zur Bereitstellung von Sauerstoffionen mit einer Korona-Entladung oder einer dielektrischen Barriereentladung. Geeignete Ionisationsvorrichtungen sind dem Fachmann bekannt.

Der Reaktor, d.h. der zentrale Reaktor für die Chlordioxiderzeugung nach der ersten Verfahrensalternative und der nachgeschaltete Reaktor nach der zweiten Verfahrensalternative, umfasst wenigstens eine Flüssigkammer, die zur Aufnahme des Wassers bzw. des Chlorwassers sowie der erzeugten Chlordioxid-Lösung geeignet ist. In einer besonders bevorzugten Ausführungsform besitzt der Reaktor einen Einsatz, der Gasverteilungseinbauten und/oder Füllkörper enthält und durch den das sauerstoffionenhaltige Gas geführt wird, während die Einbauten und/oder Füllkörper mit dem chlorhaltigen Wasser in Kontakt stehen. Der Einsatz kann ein gitterkorbartiger mit Füllkörpern gefüllter Einsatz sein, der in die Flüssigkammer eintaucht. Als Füllkörper sind die üblichen aus der Chemietechnik bekannten Füllkörper geeignet, z.B. Raschigringe, Keramikringe, Titanwolle o. dgl.. Alternativ kann die Gaszugabe auch durch einen Perlator in fein verteilter Form erfolgen, wobei ggf. durch Säurezugabe der pH-Wert kontrolliert wird.

In einer besonders bevorzugten Ausführungsform für die erste Verfahrensalternative umfasst die erfindungsgemäße Vorrichtung wenigstens folgende Bestandteile: einen Reaktor, wenigstens eine Zuführung für sauerstoffionenhaltiges Gas aus einer vorgeschalteten lonisierungseinrichtung in den Reaktor, wenigstens eine Zuführung für chlorhaltiges Wasser oder getrennte Zuführungen für gasförmiges Chlor und für Wasser in den Reaktor und wenigstens eine Abführleitung zur Abnahme von chlordioxidhaltiger wässriger Lösung aus dem Reaktor. Weiter vorzugsweise umfasst die Vorrichtung zusätzlich einen Vorlagebehälter für die abgenommene chlordioxidhaltige wässrige Lösung. Gemäß einer weiteren bevorzugten Ausführungsform umfasst die Vorrichtung zusätzlich eine Elektrolyseeinheit für die Alkalielektrolyse, mit der Chlor erzeugt wird, das dem Reaktor - gasförmig oder in Wasser oder Sole gelöst - zugeführt werden kann.

Die erfindungsgemäße Vorrichtung wird vom Fachmann je nach Anwendungszweck, Aufstellungsort und anderer Vorgaben um weitere Elemente ergänzt werden. So ist es beispielsweise bevorzugt, am Reaktor einen Entlüfter vorzusehen, der mit einem Kohlefilter ausgerüstet ist sowie einem nachgeschalteten Ozonsensor, bevor die Luft an die Umgebung abgegeben wird. Eine solche Entlüftung kann auch am Vorlagebehälter für die Chlordioxidlösung vorgesehen sein. An verschiedenen Punkten können innerhalb der Vorrichtung und insbesondere innerhalb der verschiedenen Zu- und Ableitungen Teilchenfilter, Durchflussmesser, Dosierpumpen, Drosselventile, pH-Wert-Sensoren und andere Überwachungs- und Messgeräte vorgesehen sein. Besonders bevorzugt ist es weiterhin, am Ende der Einheit zur Bereitstellung sauerstoffionenhaltigen Gases ein Rückschlagventil vorzusehen, so dass kein gasförmiges Chlor und auch keine anderen Gase, z. B. Chlordioxiddämpfe etc., in den lonisator zurückschlagen können.

Gemäß einer weiteren bevorzugten Ausführungsform umfasst die Vorrichtung zur Durchführung des erfindungsgemäßen Verfahrens eine Wasserenthärtungsanlage, die das der Elektrolyseeinheit und/oder dem Reaktor zuzuführende Trinkwasser enthärtet. Die Enthärtung kann beispielsweise mit üblichen harzförmigen Ionenaustauschern erfolgen, sollte jedoch den Chloridionen-Anteil auf keinen Fall verringern.

Im Folgenden wird die Erfindung anhand von Ausführungsbeispielen näher erläutert, wobei Bezug genommen wird auf die beigefügten Figuren. Die Ausführungsbeispiele dienen allein der besseren Illustration der Erfindung und sollen dem leichteren Verständnis der vorausgegangenen allgemeinen Erfindungsbeschreibung dienen. Die dargestellte Erfindung soll hierdurch nicht auf die Beispiele beschränkt werden, vielmehr wird der Fachmann mit Hilfe seines allgemeinen Fachwissens anhand dieser Beispiele weitere Ausführungsformen für die Erfindung auffinden können.

Die Zeichnungen zeigen:
- Figur 1: - ein Fließschema für den Verfahrensablauf nach der ersten Verfahrensalternative;
- Figur 2: - ein Fließschema für den Verfahrensablauf nach der zweiten Verfahrensalternative:
- Figur 3: - ein erstes Ausführungsbeispiel für eine Vorrichtung mit Membranzellenelektrolyse (1. Alternative), schematisch als Fließbild;
- Figur 4: - ein zweites Ausführungsbeispiel für eine Vorrichtung mit inline-Elektrolyse (1. Alternative), schematisch als Fließbild.
- Figur 5: - ein drittes Ausführungsbeispiel für eine Vorrichtung mit Membranelektrolyse wie in Figur 3, jedoch nach der zweiten Verfahrensalternative;
- Figur 6: - ein viertes Ausführungsbeispiel für eine Vorrichtung mit inline-Elektrolyse wie in Figur 4, jedoch nach der zweiten Verfahrensalternative.

In Figuren 1 und 2 sind mögliche Verfahrensabläufe kumulativ zusammengefasst. Die dargestellten Wege sind teils alternativ zu betrachten.

In jedem Falle wird ein sauerstoffionenhaltiges Gas zur Verfügung gestellt, das mit Hilfe einer Ionisationseinheit aus Luft oder einem sonstigen, im Übrigen weitestgehend inerten Sauerstoffmischgas erhalten wird (linker Zweig des Diagramms in Figuren 1 und 2). Bevorzugte apparative Maßnahmen innerhalb der Sauerstoffionenbereitstellung sind ein Eingangsfilter vor der Ionisationseinheit, insbesondere ein Partikelfilter sowie weiterhin ein Rückschlagventil zwischen Ionisationseinheit und zentralem Reaktor, das verhindert, dass chlorhaltiges Gas vom zentralen Reaktor in Richtung Ionisationseinheit zurückströmen kann.

Es wird Bezug genommen auf Figur 1. Für die Herstellung wässriger Chlordioxidlösung ist in jedem Falle Wasser erforderlich. Hier kann ortsübliches Trinkwasser verwendet werden. Das Wasser wird entweder direkt dem zentralen Reaktor zugeführt. Dies kann zeitlich vor der Zufuhr von Luft mit Sauerstoffionen einerseits und Chlorgas andererseits geschehen, so dass Wasser in dem Reaktor vorgelegt wird. Es kann jedoch auch parallel und fortlaufend zur Gaszufuhr, d.h. Sauerstoffionenzufuhr einerseits und Chlorgaszufuhr andererseits, geschehen. Parallel oder alternativ zur Wasserzufuhr in den Reaktor wird das nicht-deionisierte Wasser einer Elektrolyseeinheit zugeführt, in der eine Alkalielektrolyse durchgeführt wird, und zwar vorzugsweise entweder im Membran- oder Diaphragmaverfahren oder alternativ in einem inline-Elektrolyseverfahren mit ungeteilter Zelle. Anstelle des Wassers kann hier eine Natriumchloridlösung oder eine (hochkonzentrierte) Natriumchlorid-Sole zugeführt werden. In der Elektrolyseeinheit entsteht kathodenseitig Wasserstoff, der abgezogen wird und Natronlauge, anodenseitig Chlor. Die Natronlauge wird entnommen, sie kann teilweise zur pH-Wert-Regulierung genutzt werden, sofern dies erforderlich sein sollte. Anodenseitig entsteht Chlor, das aus der Elektrolyseeinheit entweder als Chlorwasser oder als Chlorgas entnommen wird. Das Chlorwasser wird direkt in den zentralen Reaktor überführt, um dort mit den Sauerstoffionen zur Reaktion gebracht zu werden. Alternativ wird Chlorgas in den zentralen Reaktor überführt und reagiert, wie oben schon beschrieben, um letztlich Chlordioxid zu ergeben. Das aus der Elektrolyse abgezogene Chlorgas kann in einer weiteren Ausführungsform zunächst in Wasser gelöst und dann dem zentralen Reaktor zugeführt werden. Dabei kann die gewünschte Chlorwasserkonzentration besser eingestellt werden als wenn das Chlorwasser unmittelbar aus der Elektrolyseeinheit stammt. Die Konzentrationen von Chlor in Wasser betragen bei Chlorwasser, das aus einer inline-Elektrolyseanlage stammt, bis über 10 g, vorzugsweise 3 bis 7 g, insbesondere 5 g Chlor pro Liter Wasser, bei Chlorwasser aus Alkalielektrolyse bis über 30 g, vorzugsweise 15 bis 25 g, insbesondere 20 g Chlor je Liter Wasser. Eine praktische Untergrenze liegt bei 1 g Chlor pro Liter Wasser.

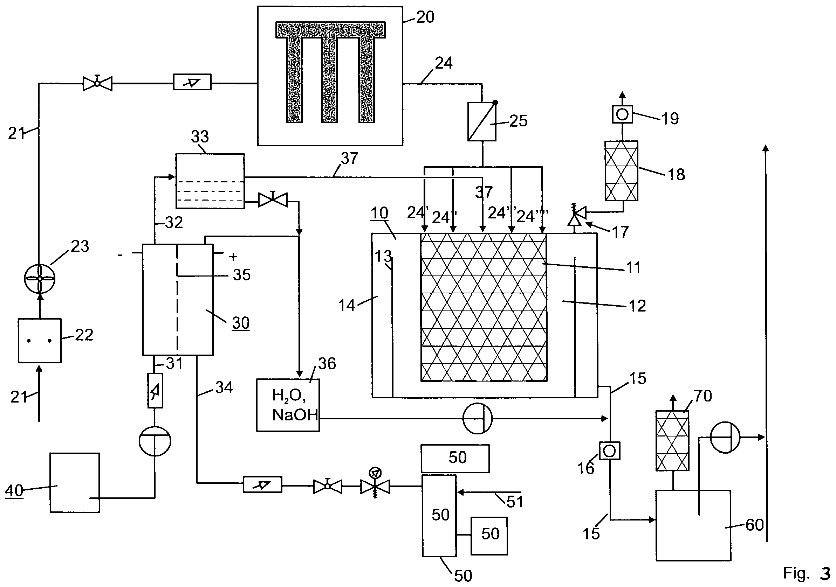

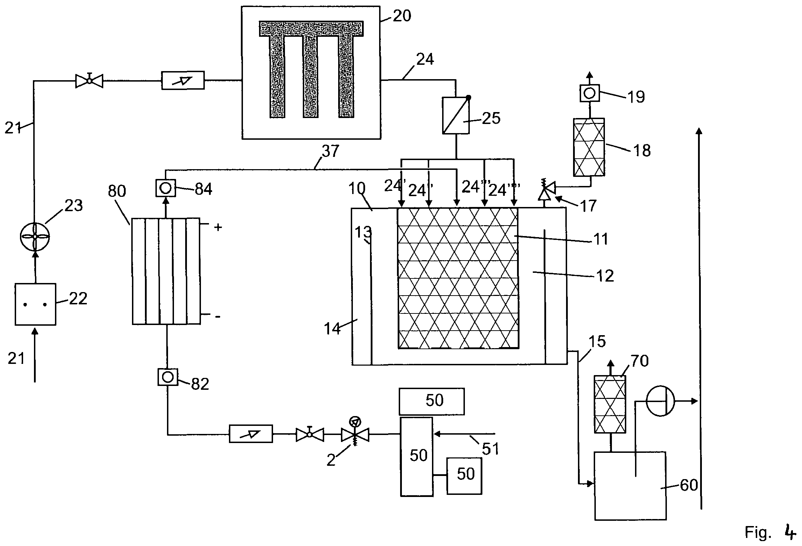

Der zentrale Reaktor, dessen Aufbau nachfolgend anhand von Figuren 3 und 4 noch näher erläutert wird, besitzt eine Entlüftung. Die aus dem zentralen Reaktor entnommene Chlordioxidlösung wird in einem Vorlagebehälter zwischengelagert, aus dem sie für die jeweilige Anwendung entnommen wird. Auch der Vorlagebehälter besitzt eine Entlüftung.

Das eingesetzte Trinkwasser sollte enthärtet sein (in Figur 1 nicht gesondert dargestellt), d.h. von Calciumionen befreit, da diese in der nachfolgenden Elektrolysezelle stören.

Figur 2 zeigt ein Fließschema für die möglichen Varianten zur Verfahrensalternative zwei und die zugehörigen Stoffströme (Stoffe durch runde Elemente dargestellt) und Anlagenelemente (durch eckige graphische Elemente dargestellt). Wiederum wird Luft in der Ionisationseinheit mit Hilfe von Hochspannung ionisiert, wodurch ein Gasstrom mit Sauerstoffionen (O2+/- (O3)) erhalten wird.

Kern der Verfahrensalternative zwei ist es, das mit Hochspannung aus einem sauerstoffhaltigen Gas oder Gasgemisch erhaltene sauerstoffionenhaltige Gas vor dem Zusammenführen mit Chlor in eine wässrige Salzlösung (Sole) einzubringen, in der die Sauerstoffionen in ausreichender Konzentration transportiert werden können, was nach derzeitiger Erkenntnis erhebliche Vorteile im Vergleich zu einem Transport der Ionen im Gasstrom mit sich bringt. Die Sole ist eine Alkalichloridsole, d.h., eine konzentrierte NaCl- oder KCl-Lösung, in der Praxis i.a. NaCI-Sole. Diese besonderen Verfahrensschritte der Alternative zwei können mit allen Ausführungsformen der Alternative eins kombiniert werden, indem anstelle einer einfachen Alkalichlorid-Sole eine mit Sauerstoffionen beladene Sole verwendet wird.

Vorzugsweise wird das sauerstoffionenhaltige Gas primär mit der für die Elektrolyseeinheit vorgesehenen Natriumsole zusammengeführt. Die mit Sauerstoffionen beladene Alkalichlorid-Sole gelangt in den Anodenraum des Elektrolysereaktors. Aus dem Kathodenraum werden Wasserstoff und Lauge abgezogen, letztere kann für die pH-Wert-Einstellung an anderer Stelle Verwendung finden. Optional kann sauerstoffionenhaltiges Gas aus der Ionisationseinheit an weiteren Zugabepunkten in verschiedene Stoffströme eingeführt werden. Es kann beispielsweise zusätzlich in das Trinkwasser eingeleitet werden, mit dem der Nachbehandlungsreaktor (Reaktor zwei nach dem Elektrolyse-Reaktor) beschickt wird. Ein Teil dieses Trinkwasserstroms kann mit Chlorgas unter Bildung von Chlorwasser beladen werden. Wenn außerdem sauerstoffionenhaltiges Gas eingeleitet wurde, wird eine zusätzliche Menge an reaktivem Gemisch aus Chlor, Wasser und Sauerstoffionen in den Nachbehandlungsreaktor eingeführt und kann dort zu Ende reagieren. Frisches, vorzugsweise entkalktes Trinkwasser wird in den Kathodenraum des Elektrolyse-Reaktors gegeben, wie zu Figur 1 schon beschrieben. Anstelle von sauerstoffionenhaltigem Trinkwasser oder reinem Trinkwasser kann auch die mit Sauerstoffionen beladene Alkalichlorid-Sole mit einem aus der Elektrolyse stammenden Chlorgasstrom vereinigt werden. Ferner kann ein aus dem Elektrolysereaktor entnommener Anolytstrom (Chlorwasser in Sole, ggf. mit verbliebenen Sauerstoffionen) nochmals mit sauerstoffionenhaltigem Gas beaufschlagt werden, um verbliebenes Chlor - auch aus den Hydrolyseprodukten Hypochlorige Säure und Salzsäure, ggf. nach Symproportionierung - eingangs des Nachbehandlungsreaktors in einem reaktiven Gemisch zuzuführen. Bezüglich Nachbehandlung und Verwendung ergeben sich durch die zweite Alternative keine Besonderheiten.

Im Folgenden wird Bezug genommen auf Figur 3, die eine Vorrichtung zur Erzeugung einer wässrigen Chlordioxidlösung zeigt, die einen zentralen Reaktor 10, eine Ionisationseinheit 20 und eine Elektrolyseeinheit 30 umfasst. Die Elektrolyseeinheit 30 ist in diesem Beispiel eine Membranzellenelektrolyse. Die Elektrolysezelle wird durch die Membran (oder alternativ ein Diaphragma) 35 in zwei Halbzellen unterteilt. Anodenseitig wird Natriumchlorid-Sole aus einem Behälter 40 über Leitung 31 durch die Anodenhalbzelle geleitet. Das gebildete Chlorgas und Wasser verlassen die anodenseitige Halbzelle über Leitung 32 und gelangen in den Trennbehälter 33. Kathodenseitig wird enthärtetes Wasser über die Leitung 34 durch die Kathodenhalbzelle gefördert. Die Verwendung von enthärtetem Wasser vermeidet ein schnelles Zusetzen der Poren der Membran 35. Der austretende Förderstrom wird mit der Lösung vereinigt, die aus Trennbehälter 33 abgenommen wird. Die in der Elektrolyse gebildete Natronlauge wird in einen Sammelbehälter 36 abgeführt und kann gegebenenfalls zur pH-Wert-Regulierung für die chlordioxidhaltige wässrige Lösung verwendet werden. Aus dem Trennbehälter 33 wird in diesem Beispiel eine wässrige Chlorlösung über Leitung 37 in den zentralen Reaktor 10 überführt. Alternativ könnte Chlorgas aus dem Trennbehälter 33 abgezogen und dem Wasser enthaltenden Reaktor 10 zugeführt werden.

Ein ganz wesentlicher Ausgangsstoff des hier dargestellten bevorzugten Verfahrens ist Trinkwasser mit natürlichem Salzgehalt. Dieses wird über Leitung 51 der Wasserenthärtungsanlage 50 zugeleitet. Das enthärtete Trinkwasser wird über die Leitung 34 in die Elektrolyseeinheit 30 geführt.

Für die Bereitstellung von Sauerstoffionen wird in diesem Beispiel von atmosphärischer Luft ausgegangen, die über die Leitung 21 in die Ionisationseinheit 20 eingebracht wird. Sie passiert dabei einen Partikelfilter 22 und einen Ventilator 23. Als Ionisationseinheit 20 wird eine solche verwendet, die eine möglichst hohe Ausbeute an Sauerstoffionen, nämlich O₂⁻-Ionen und O₂⁺-Ionen bildet. Die Ionisierung erfolgt hier über eine dielektrische Barriereentladung. Diese ist so gesteuert, dass sie in Abhängigkeit des Sauerstoffgehalts erfolgt. Die Bildung von Stickstoffionen soll möglichst gering bleiben. Das sauerstoffionenhaltige Gas, hier sauerstoffionenhaltige Luft, verlässt die Ionisationseinheit 20 über Leitung 24 und passiert das Rückschlagventil 25, bevor das sauerstoffionenhaltige Gas verteilt über die Leitungen 24' - 24"" in den Reaktor 10 eingeführt wird.

Chlorgas und Sauerstoffionen beladendes Gas treten getrennt über die Leitungen 37 einerseits und 24' - 24"" andererseits von oben in den Reaktor 10 ein und werden dort unmittelbar in einen mit Füllkörpern gefüllten Einsatz 11 geleitet, der eine erste Reaktionskammer für die Gasphase darstellt. Der Einsatz 11 hängt in einer Reaktionskammer 12 für die Flüssigphase. Der Einsatz 11 ist ein Gittereinsatz. Das über Leitung 37 eingeführte Chlorwasser verteilt sich innerhalb des Einsatzes 11 über die Füllkörper, d.h. das Chlorwasser berieselt die Füllkörper und benetzt die Füllkörperoberfläche. Gleichzeitig wird das sauerstoffionenbeladende Gas, das verteilt über die Leitungen 24' - 24"" eingeführt wurde, innerhalb des gesamten Einsatzraumes mit dem Chlorwasser in Kontakt gebracht, und es entsteht Chlordioxid in wässriger Lösung. Fortlaufend reagierendes Chlorwasser und das in Wasser gelöste Chlordioxid sammeln sich in der zweiten Reaktorkammer 12. Im stationären Zustand des kontinuierlichen Verfahrens ist ein Großteil des mit Füllkörpern gefüllten Einsatzes 11 in die wässrige Lösung eingetaucht. Die Darstellung in den Figuren ist allerdings schematisch und nicht maßstäblich zu betrachten. Die wässrige Chlordioxidlösung steigt in der zweiten Reaktorkammer 12 bis zum Überlauf 13 und läuft bei Überschreiten dieses Pegels in eine äußere Reaktorkammer 14 ab. Der Überlauf 13 markiert den steady-state Flüssigkeitspegel, während des kontinuierlich geführten Verfahrens. Aus der äußeren Reaktorkammer 14 wird schließlich die chlordioxidhaltige wässrige Lösung über Leitung 15 abgezogen. Der innerhalb dieser Leitung 15 angeordnete pH-Sensor 16 kontrolliert, ob der gewünschte pH-Bereich eingehalten wird. Der Reaktor 10 weist zur Druckregulation und Gasabfuhr noch den Entlüfter 17 auf. Die Abluft wird durch einen Aktivkohlefilter 18 und einen Ozonsensor 19 geführt, bevor sie in die Umgebung entlassen wird.

Die aus dem Reaktor entnommene chlordioxidhaltige wässrige Lösung wird schließlich in einen Vorlagebehälter 60 geleitet und von dort aus mit einer Dosierpumpe entnommen und der Verwendung zugeführt. Auch der Vorlagebehälter 60 besitzt einen Ausgang für Abluft und einen Aktivkohlefilter 70. Weitere Bestandteile der Anlage, wie unter anderem Durchflussmesser, Druckreduzierventile und Dosierpumpen sind mit Hilfe der Standardsymbole dargestellt.

Mit Hilfe der in Figur 3 gezeigten Vorrichtung wird aus Trinkwasser, NaCI-Sole und atmosphärischer Luft eine einsatzfertige wässrige Chlordioxidlösung hergestellt. Die Anlage ist technisch gut zu beherrschen. Der Umgang mit explosiven Gasen und stark ätzenden Salzen wird vermieden. Das Chlor befindet sich im geschlossenen Leitungssystem. Durchsatz und Konzentrationen können so eingestellt werden, dass das Chlor vollständig verbraucht wird und nirgends unverbraucht entweicht. Die Abluft wird nur über Aktivkohle freigegeben. Als zusätzliche Maßnahmen muss nur Sole zugeführt und Lauge abgeführt werden, und die Wasserenthärtungsanlage muss periodisch mit frischem Enthärtungsmittel versorgt werden.

Im Folgenden wird Bezug genommen auf Figur 4. Darin ist eine Alternativ-Vorrichtung dargestellt, die sich von der in Figur 3 gezeigten lediglich in der Elektrolyseeinheit unterscheidet. Verfahren und Vorrichtung nach Figur 4 müssen daher nicht im Ganzen beschrieben werden. Gleiche Teile sind mit gleichen Bezugszeichen bezeichnet. Anstelle der Membranzellenelektrolyseeinheit 30 ist hier eine inline-Elektrolyseeinheit 80, also eine ungeteilte Zelle, gezeigt. Die inline-Elektrolyseeinheit 80 besitzt ein Elektrodenpaket, das aus mindestens einer Anode und mindestens einer Kathode, vorzugsweise jedoch mehreren Anoden und Katoden in geeigneter Stapelung bzw. Aneinanderreihung besteht. Die inline-Elektrolyseeinheit 80 wird mit Wasser mit natürlichem Salzgehalt betrieben, wobei im Bedarfsfalle Natriumchlorid zudosiert werden kann. Das über Leitung 51 zugeführte Trinkwasser mit natürlichem Salzgehalt wird, wie in dem zuvor beschriebenen Ausführungsbeispiel, zunächst enthärtet. Eingangs der Elektrolyseeinheit 80 findet eine pH-Wert-Kontrolle mit dem pH-Sensor 82 statt. Ausgangs der inline-Elektrolyse ist ein Chlorsensor 84 angeordnet. Aus der inline-Elektrolyseeinheit 80 wird eine chlorhaltige wässrige Lösung mit einem Chlorgehalt von ca. 5 g pro Liter Lösung entnommen und über die Leitung 37 in den Reaktor 10 eingeführt. Die weiteren Vorrichtungsbestandteile und Abläufe entsprechen den in Figur 3 gezeigten.

Die Anordnung mit einer ungeteilten Elektrolysezelle 80 bietet den Vorteil eines geringeren apparativen Aufwands, da keine Soledosierung, wie bei der geteilten Zelle 30, erforderlich ist. Allerdings ist der Wirkungsgrad geringer, da sich ein basischer pH-Wert (zwischen 9 und 10) einstellt, wodurch die Reaktion mit dem ionisierten Sauerstoffgas verschlechtert abläuft.

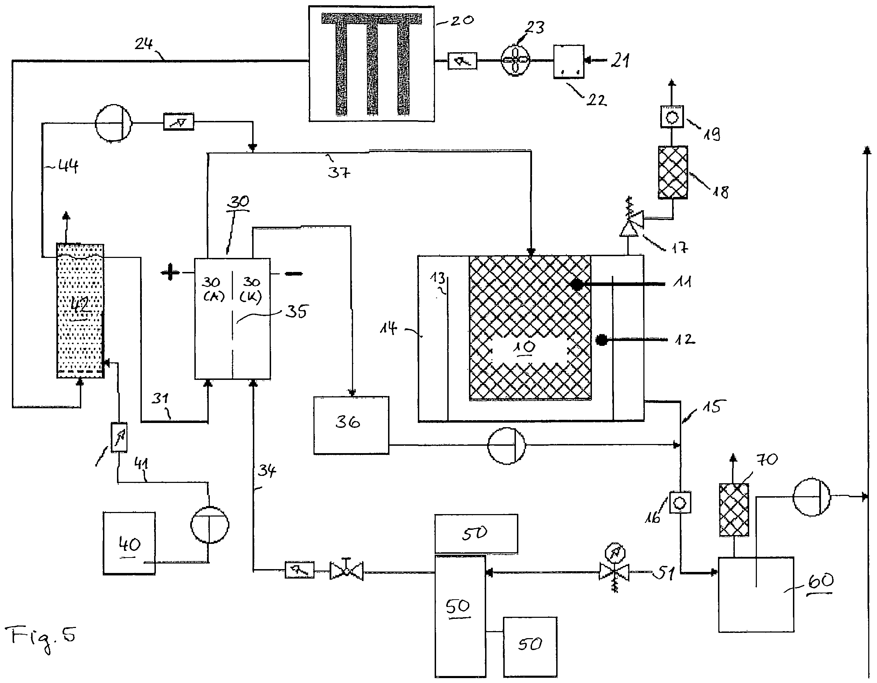

Im Folgenden wird Bezug genommen auf Figur 5. Hier wird eine Vorrichtung bzw. Anlage zur Erzeugung einer wässrigen Chlordioxidlösung mit einer Verfahrensführung gezeigt, bei der Chlor und Sauerstoffionen nicht erst in einer wässrigen Lösung in Reaktor 10 zusammengeführt werden, sondern bereits davor in der Elektrolyseeinheit 30, und zwar in deren Anodenraum 30(A). Die Elektrolyseeinheit wird dadurch zu einem Chlordioxidreaktor, im Folgenden auch Elektrolyse-Reaktor genannt, und der bisher zentrale Reaktor 10 wird zu einem nachgeschalteten Reaktor, in dem die Reaktion fortgeführt wird.

Die Elektrolyse wird grundsätzlich ähnlich wie in Figur 3 beschrieben geführt. Anodenseitig wird eine konzentrierte NaCI-Lösung, die Sole, aus Behälter 40 über Leitung 41, die Einheit 42 und Leitung 31 als Anolyt in die Anodenkammer 30(A) eingeführt. Kathodenseitig wird entkalktes Trinkwasser eingeführt, wie zuvor schon beschrieben. Entsprechende Bauteile sind mit übereinstimmenden Bezugszeichen gekennzeichnet. Der Elektrolyse-Reaktor 30 ist ein Membranzellenreaktor, d.h., die Chlorbestandteile können durch die ionenspezifische Membran 35 praktisch vollständig im Anodenraum zurückgehalten werden.

Anders als in Figuren 3 und 4 wird die aus der Ionisationseinheit 20 abgenommene ionisierte Luft über Leitung 24 nicht unmittelbar dem Reaktor 10 zugeführt, um dort mit bereits erzeugtem Chlor oder Chlorwasser in Kontakt zu kommen, sondern wird in die Gasbeaufschlagungseinheit 42 geführt. Die über Leitung 41 eingeführte Sole wird in dieser Einheit mit Sauerstoffionen beladen und erst dann über Leitung 31 in die Anodenkammer der Elektrolysezelle geführt. Sauerstoff und die kurzlebigen Sauerstoffionen sind in reinem Wasser nur wenig löslich. Sie sind in Chlorwasser noch weniger löslich und werden insbesondere bei Chlorübersättigung und bei entweichendem Chlorgas mit ausgetrieben. Eine konzentrierte Alkalichloridlösung, in diesem Beispiel NaCl-Sole, besitzt jedoch eine andere Konsistenz und ist in der Lage, eine höhere Konzentration an Sauerstoffatomen pro Volumen in Lösung zu halten, bzw. mit sich zu führen.

Die Gasbeaufschlagungseinrichtung 42 ist in diesem Beispiel so gestaltet, dass die Sole in der Einrichtung vorgelegt wird und dass das sauerstoffionenhaltige Gas über Leitung 24 von unten eingeleitet, über einen Siebboden verteilt und nach oben durch die Sole feinverteilt perlen gelassen wird. Am oberen Ende der Gasbeaufschlagungseinrichtung 42 ist in der Regel ein Gasauslass mit Überdruckventil vorhanden. Der Hauptstrom der beladenen Sole wird vom Kopfende der Einheit 42 über Leitung 31 in den Anodenraum 30(A) der Elektrolysezelle eingeleitet, wo während des Durchströmens dieser Sole elektrolytisch Chlor erzeugt wird. Aufgrund der ionenselektiven Membran 35 bleiben Chlor und Chlordioxid, sowie ggf. weitere in diesem Raum gebildete Chlorverbindungen im Anodenraum. Die Reaktionsbedingungen - unter in situ Chlorbildung während der Elektrolyse - und Konzentrationsverhältnisse lassen eine relativ hohe Chlordioxid-Ausbeute und -Bildungsrate zu. Die Sole mit dem darin gebildetem, gelöstem Chlordioxid, einem Restchloranteil und ggf. geringen Mengen an kurzlebigen Sauerstoffionen wird über Leitung 37 in einen Reaktor 10 geleitet, der vom Aufbau den in Figuren 3 und 4 gezeigten Reaktoren gleicht. Anstelle des mit mehreren Kammern ausgebildeten Reaktors 10 können auch nacheinander geschaltete Reaktoren verwendet werden, Reaktor 10 kann durch eine Reaktor-Kaskade verwirklicht werden.

Die in der Kathodenkammer 30(K) gebildete Natronlauge kann, wie schon beschrieben, über den Vorratsbehälter 36 in die durch Leitung 15 abgeführte wässrige Chlordioxidlösung zur pH-Wert-Regulierung eindosiert werden.

Zwischen dem Elektrolyse-Reaktor 30 und dem nachgeschalteten Reaktor 10 ist in diesem Ausführungsbeispiel ein Nachbehandlungsschritt vorgesehen. Hierfür wird ein Teilstrom mit Sauerstoffionen beladener Sole aus der Einheit 42 über Leitung 44 in die Leitung 37 vor Eintritt in den nachgeschalteten Reaktor zudosiert. Auf diese Weise wird dem weiter abreagierenden Gemisch aus dem Elektrolyse-Reaktor, das in der Regel eine höhere Konzentration an Chlor und Chlorverbindungen als an Sauerstoffionen einschließlich Ozon enthält, durch zusätzliche Zufuhr von in Sole geführten Sauerstoffionen noch einmal Gelegenheit gegeben, Chlordioxid zu bilden, und zwar auf dem weiteren Weg in den Reaktor 10 über Leitung 37 und in dem Reaktor 10 selbst.

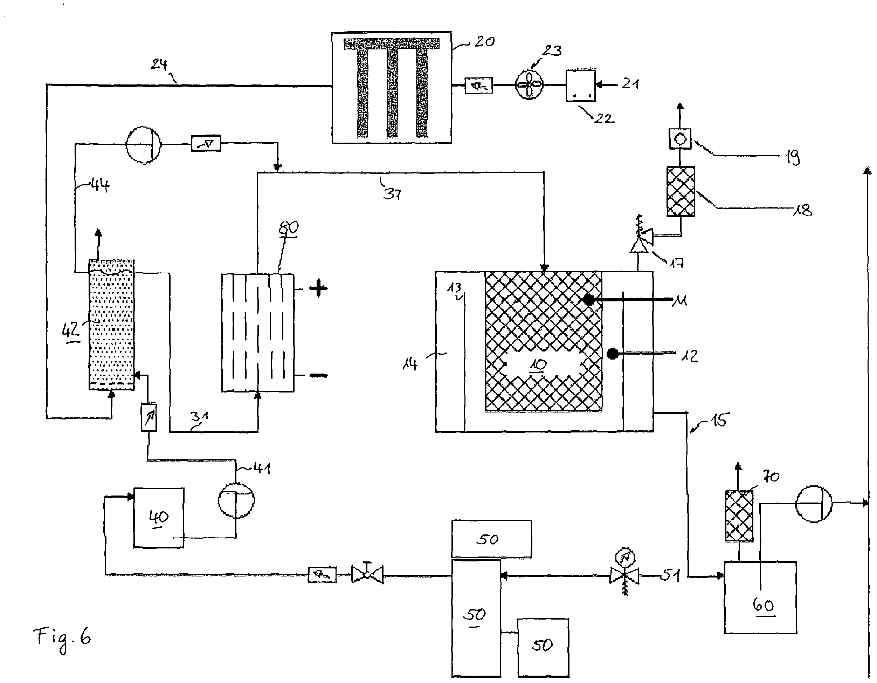

Im Folgenden wird Bezug genommen auf Figur 6. Wie in Figur 4 ist in Figur 6 die Membranzellen-Elektrolyseeinheit durch eine Inline-Elektrolysezelle 80 ersetzt. Im Übrigen entspricht die Gesamtvorrichtung weitgehend der in Figur 5 gezeigten. Im Vergleich zu Figur 4, die eine Anlage zur Durchführung der ersten Verfahrensalternative zeigt, wird die Inline-Elektrolyseeinheit 80 hier nicht mit Trinkwasser mit natürlichem Salzgehalt betrieben, sondern wird mit Sole beaufschlagt, und zwar wiederum, wie in Figur 5, mit einer mit Sauerstoffionen beladenen Sole.

### Bezugszeichenliste

- 10: zentraler Reaktor
- 11: Einsatz/1. Reaktorkammer/1. Reaktor
- 12: zweite Reaktorkammer/2. Reaktor
- 13: Überlauf
- 14: äußere Reaktorkammer
- 15: Leitung/Abführen der Chlordioxidlösung
- 17: Entlüfter
- 18: Aktivkohlefilter
- 16: Ozonsensor
- 19: Ozonsensor
- 20: Ionisationseinheit
- 21: Leitung/Luftzufuhr
- 22: Partikelfilter
- 23: Ventilator
- 24: Leitung/sauerstoffionenhaltiges Gas
- 25: Rückschlagventil
- 30: Elektrolyseeinheit
- 31: Leitung/(Zuleitung Anodenhalbzelle)
- 32: Leitung/(Ableitung Anodenhalbzelle)
- 33: Trennbehälter Cl₂-Gas
- 34: Zu- und Ableitung Kathodenhalbzelle
- 35: Membran
- 36: Natronlauge-Sammelbehälter
- 37: Leitung (Chlorwasser/Chlorsole)
- 40: Vorratsbehälter NaCl-Sole
- 41: Leitung/ Solezufuhr Gasbeaufschlagung
- 42: Gasbeaufschlagungseinheit
- 44: Leitung/Nachbehandlung mit (O2+/-)-Sole
- 50: Wasserenthärtungsanlage
- 51: Leitung/Trinkwasserzuführung
- 60: ClO₂ (aq) Vorlagebehälter
- 70: Aktivkohlefilter
- 80: Inline-Elektrolyseeinheit
- 82: pH-Sensor
- 84: Cl₂-Sensor

## Patentansprüche

1. Verfahren zur Herstellung einer wässrigen Chlordioxid-Lösung mit Hilfe von Chlor (Cl₂) und Sauerstoffionen (O₂⁻/O₂⁺) in einem Reaktor (10; 30(A); 80), **dadurch gekennzeichnet, dass** die Sauerstoffionen in einer dem Reaktor vorgeschalteten Ionisationseinheit (20) durch Hochspannung erzeugt werden, wodurch ein sauerstoffionenhaltiges Gas erhalten wird, dass das Chlor elektrolytisch erzeugt wird und dass das elektrolytisch erzeugte Chlor mit den Sauerstoffionen in wässrigem Milieu zur Reaktion gebracht wird, um eine wässrige Chlordioxid-Lösung zu ergeben.

2. Verfahren nach einem Anspruch 1 , **dadurch gekennzeichnet, dass** das Chlor, nach elektrolytischer Erzeugung in einem vorgeschalteten Schritt, zusammen mit Wasser in Form einer chlorhaltigen wässrigen Lösung in den Reaktor (10) eingebracht oder in dem Reaktor (10) vorgelegt werden.

3. Verfahren nach Anspruch 1, **dadurch gekennzeichnet, dass** das Chlor in situ in einem Elektrolyse-Anodenraum (30(A)) erzeugt wird, der zugleich der Reaktor (10) zur Herstellung der Chlordioxid-Lösung ist.

4. Verfahren nach einem der Ansprüche 1 bis 3, **dadurch gekennzeichnet, dass** bei der Elektrolyse eine chloridhaltige Sole eingesetzt wird, insbesondere eine NaCI-Sole.

5. Verfahren nach einem der Ansprüche 1 bis 4, **dadurch gekennzeichnet, dass** eine mit Sauerstoffionen aus dem ionisierten Gas gesättigte Sole mit erzeugtem Chlor oder Chlorwasser vereinigt und nachfolgend dem Reaktor (10) zugeführt oder in dem Reaktor (10) vereinigt wird.

6. Verfahren nach einem der Ansprüche 1 bis 4, **dadurch gekennzeichnet, dass** eine mit Sauerstoffionen aus dem ionisierten Gas in einem vorgelagerten Schritt gesättigte Sole der Elektrolyse (30; 80) zugeführt wird.

7. Verfahren nach einem der Ansprüche 1 bis 6, **dadurch gekennzeichnet, dass** das Ausgangsgas für die Ionisierung Luft, Sauerstoff, ein Gemisch aus Luft mit Sauerstoff, ein Gemisch aus Edelgasen mit Sauerstoff, edelgasangereicherte Luft oder ein Luft-Sauerstoff-Gemisch ist.

8. Verfahren nach einem der Ansprüche 1 bis 7, **dadurch gekennzeichnet, dass** es kontinuierlich geführt wird, wobei aus dem Reaktor (10) kontinuierlich wässrige Chlordioxid-Lösung abgeführt wird.

9. Vorrichtung zur Durchführung des Verfahrens nach einem der Ansprüche 1 bis 8, **dadurch gekennzeichnet, dass** die Vorrichtung wenigstens einen Reaktor (10) umfasst, dem eine Elektrolyseeinheit (30; 80) vorgeschaltet ist, die mit dem Reaktor (10) durch wenigstens eine Leitung (37) verbunden ist, durch die das Chlor gasförmig und/oder in wässriger Lösung in den Reaktor (10) überführt wird, und dass die Vorrichtung eine vorgeschaltete, stromaufwärts gelegene Einheit (20) für die Erzeugung von Sauerstoffionen umfasst, in der die Sauerstoffionen durch Hochspannung erzeugt werden, wobei in dem Reaktor (10) Wasser oder Sole, Chlor und Sauerstoffionen zusammengeführt werden.

10. Vorrichtung nach Anspruch 9, **dadurch gekennzeichnet, dass** stromabwärts der Ionisierungseinheit (20) eine Gasbeaufschlagungseinheit (42) für die Beaufschlagung von Sole mit Sauerstoffionen angeordnet ist, aus der mit Sauerstoffionen beaufschlagte Sole in den Anodenraum (30(A)) einer Elektrolyseeinheit (30) oder in eine inline-Elektrolyseeinheit (80) und optional zusätzlich in eine Zuleitung (44,37) zu dem Reaktor (10) zugeführt wird.

11. Vorrichtung nach Anspruch 9 oder 10, **dadurch gekennzeichnet, dass** der Reaktor (10) einen Einsatz (11) aufweist, der Gasverteilungseinbauten und/oder Füllkörper enthält und durch den die Reaktionspartner geführt werden, wobei die Einbauten und/oder Füllkörper mit dem chlorhaltigen Wasser oder der chlorhaltigen Sole in Kontakt stehen.

12. Vorrichtung nach einem der Ansprüche 9 bis 11, **dadurch gekennzeichnet, dass** die Vorrichtung eine Wasserenthärtungseinrichtung (50) für die Aufbereitung von Trinkwasser für die Elektrolyseeinheit (30; 80), die Sole (40) und/oder den Reaktor (10) umfasst.

13. Vorrichtung nach einem der Ansprüche 9 bis 12, **gekennzeichnet durch** einen Vorratsbehälter (60) zur Aufnahme der erzeugten wässrigen Chlordioxidlösung.

## Claims

1. Process for producing an aqueous chlorine dioxide solution by means of chlorine (Cl₂) and oxygen ions (O₂⁻/O₂⁺) in a reactor (10; 30(A); 80), **characterized in that** the oxygen ions are produced by means of high voltage in an ionization unit (20) located upstream of the reactor, giving a gas containing oxygen ions, **in that** the chlorine is produced electrolytically and **in that** the electrolytically produced chlorine is reacted with the oxygen ions in an aqueous medium in order to give an aqueous chlorine dioxide solution.

2. Process according to Claim 1, **characterized in that** the chlorine is, after having been produced electrolytically in a preceding step, introduced together with water in the form of a chlorine-containing aqueous solution into the reactor (10) or the chlorine and water are initially placed in the reactor (10).

3. Process according to Claim 1, **characterized in that** the chlorine is produced in situ in an electrolysis anode space (30 (A)) which serves at the same time as the reactor (10) for producing the chlorine dioxide solution.

4. Process according to any of Claims 1 to 3, **characterized in that** a chloride-containing brine, in particular an NaCl brine, is used in the electrolysis.

5. Process according to any of Claims 1 to 4, **characterized in that** a brine saturated with oxygen ions from the ionized gas is combined with chlorine or chlorine water produced and is subsequently fed into the reactor (10) or the brine and chlorine or chlorine water are combined in the reactor (10).

6. Process according to any of Claims 1 to 4, **characterized in that** a brine saturated with oxygen ions from the ionized gas in a preceding step is fed to the electrolysis (30; 80).

7. Process according to any of Claims 1 to 6, **characterized in that** the starting gas for the ionization is air, oxygen, a mixture of air with oxygen, a mixture of noble gases with oxygen, noble gas-enriched air or an air/oxygen mixture.

8. Process according to any of Claims 1 to 7, **characterized in that** it is carried out continuously, with aqueous chlorine dioxide solution being continuously discharged from the reactor (10).

9. Apparatus for carrying out the process according to any of Claims 1 to 8, **characterized in that** the apparatus comprises at least one reactor (10), upstream of which there is an electrolysis unit (30; 80) which is connected to the reactor (10) by at least one conduit (37) through which the chlorine is transferred in gaseous form and/or in aqueous solution into the reactor (10), and **in that** the apparatus comprises a preceding unit (20) for producing oxygen ions which is located upstream and in which the oxygen ions are produced by means of high voltage, where water or brine, chlorine and oxygen ions are brought together in the reactor (10) .

10. Apparatus according to Claim 9, **characterized in that** a gas supply unit (42) for supplying oxygen ions to brine is arranged downstream of the ionization unit (20), from which gas supply unit brine supplied with oxygen ions is fed into the anode space (30(A)) of an electrolysis unit (30) or into an in-line electrolysis unit (80) and optionally also into a feed conduit (44, 37) to the reactor (10).

11. Apparatus according to Claim 9 or 10, **characterized in that** the reactor (10) has an insert (11) which contains gas distribution internals and/or packing elements and through which the reactants are conveyed, where the internals and/or packing elements are in contact with the chlorine-containing water or the chlorine-containing brine.

12. Apparatus according to any of Claims 9 to 11, **characterized in that** the apparatus comprises a water softening device (50) for treating drinking water for the electrolysis unit (30; 80), the brine (40) and/or the reactor (10).

13. Apparatus according to any of Claims 9 to 12, **characterized by** a reservoir (60) for accommodating the aqueous chlorine dioxide solution produced.

## Revendications

1. Procédé de préparation d'une solution aqueuse de dioxyde de chlore à l'aide de chlore (Cl₂) et d'ions oxygène (O₂⁻/O₂⁺) dans un réacteur (10 ; 30(A) ; 80), **caractérisé en ce que** les ions oxygène sont produits par une haute tension dans une unité d'ionisation (20) disposée en amont du réacteur, obtenant ainsi un gaz contenant des ions oxygène, **en ce que** le chlore est préparé par voie électrolytique et **en ce que** le chlore préparé par voie électrolytique est mis à réagir avec les ions oxygène dans un milieu aqueux pour obtenir une solution aqueuse de dioxyde de chlore.

2. Procédé selon la revendication 1, **caractérisé en ce qu'**après la préparation par voie électrolytique dans une étape en amont, le chlore est introduit dans le réacteur (10) ou amené au réacteur (10), conjointement avec l'eau sous forme de solution aqueuse contenant du chlore.

3. Procédé selon la revendication 1, **caractérisé en ce que** le chlore est préparé in situ dans une chambre anodique d'électrolyse (30(A)) qui est simultanément le réacteur (10) de production de la solution de dioxyde de chlore.

4. Procédé selon l'une des revendications 1 à 3, **caractérisé en ce que** pour l'électrolyse on utilise une saumure contenant du chlorure, en particulier une saumure de NaCl.

5. Procédé selon l'une des revendications 1 à 4, **caractérisé en ce qu'**une saumure saturée en ions oxygène provenant du gaz ionisé est combinée avec du chlore ou de l'eau chlorée préparée et ensuite elle est amenée au réacteur (10), ou bien elle est combinée dans le réacteur (10).

6. Procédé selon l'une des revendications 1 à 4, **caractérisé en ce qu'**une saumure qui, dans une étape amont, est saturée en ions oxygène provenant du gaz ionisé est amenée à l'électrolyse (30 ; 80).

7. Procédé selon l'une des revendications 1 à 6, **caractérisé en ce que** le gaz de départ de l'ionisation est de l'air, de l'oxygène, un mélange d'air et d'oxygène, un mélange de gaz nobles et d'oxygène, de l'air enrichi en gaz nobles ou un mélange air-oxygène.

8. Procédé selon l'une des revendications 1 à 7, **caractérisé en ce qu'**il est mis en oeuvre en continu, la solution aqueuse de dioxyde de chlore étant extraite en continu hors du réacteur (10).

9. Dispositif pour mettre en oeuvre le procédé selon l'une des revendications 1 à 8, **caractérisé en ce que** le dispositif comprend au moins un réacteur (10) en amont duquel est disposée une unité d'électrolyse (30 ; 80) qui est reliée au réacteur (10) par au moins un conduit (37) à travers lequel le chlore est transmis sous forme gazeuse et/ou en solution aqueuse jusque dans le réacteur (10), et **en ce que** le dispositif comprend une unité (20) disposée en amont en direction d'écoulement et destinée à la production d'ions oxygène, dans laquelle les ions oxygène sont produits par haute tension, de l'eau ou de la saumure, du chlore et des ions oxygène étant réunis dans le réacteur (10).

10. Dispositif selon la revendication 9, **caractérisé en ce qu'**en aval de l'unité d'ionisation (20), il est prévu une unité d'alimentation de gaz (42) pour l'alimentation d'ions oxygène dans la saumure, unité depuis laquelle la saumure alimentée en ions oxygène est amenée jusque dans la chambre anodique (30(A)) d'une unité d'électrolyse (30) ou jusque dans une unité d'électrolyse (80) en ligne et optionnellement en supplément jusque dans un conduit d'amenée (44, 37) menant vers le réacteur (10).

11. Dispositif selon la revendication 9 ou 10, **caractérisé en ce que** le réacteur (10) comprend un insert (11) qui contient des moyens intégrés de répartition de gaz et/ou des corps de remplissage et qui est traversé par les partenaires réactionnels, les moyens intégrés et/ou les corps de remplissage étant en contact avec l'eau chlorée ou la saumure chlorée.

12. Dispositif selon l'une des revendications 9 à 11, **caractérisé en ce que** le dispositif comprend un moyen adoucisseur d'eau (50) pour la préparation d'eau potable pour l'unité d'électrolyse (30 ; 80), pour la saumure (40) et/ou pour le réacteur (10).

13. Dispositif selon l'une des revendications 9 à 12, **caractérisé par** un réservoir (60) pour recevoir la solution aqueuse de dioxyde de chlore préparée.
